# EUROPEAN PATENT SPECIFICATION

(11) **EP 3 566 867 B1**
(45) Date of publication and mention of the grant of the patent: **30.03.2022**
(21) Application number: 18735832.0
(22) Date of filing: 03.01.2018
(51) Int. Cl.: B32B 27/36, B32B 27/08, B32B 27/20, B32B 37/15

(54) **POLYESTER-BASED GLASS TEXTURE DECORATIVE SHEET**
DEKORBLATT AUF POLYESTERBASIS MIT GLASTEXTUR
FEUILLE DÉCORATIVE À TEXTURE DE VERRE À BASE DE POLYESTER

(30) Priority: 04.01.2017 KR 20170001369
(43) Date of publication of application: 13.11.2019
(73) Proprietor: Toray Advanced Materials Korea Inc., Gumi-si, Gyeongsangbuk-do 39389 (KR)
(72) Inventor: HAN, Beom Taek, Incheon 21652 (KR); MIN, Ho Jin, Seoul 03450 (KR); KANG, Kyoo Weon, Seoul 06352 (KR); LEE, Nam Heui, Seongnam-si Gyeonggi-do 13611 (KR)
(74) Representative: V.O.
(86) International application number: PCT/KR2018/000129
(87) International publication number: WO 2018/128392

(56) References cited:
- EP-A1- 0 792 211
- EP-A1- 2 111 978
- EP-A1- 3 109 178
- JP-A- H0 397 555
- JP-A- 2010 030 266
- JP-A- 2014 117 887
- JP-A- 2015 189 221
- KR-A- 20120 047 845
- KR-A- 20150 021 150

## Description

### [Technical Field]

The present disclosure relates to a polyester decorative sheet with a glass texture.

### [Background Art]

A variety of surface textures are realize on household appliances, furniture, automobile interior materials, etc. through paint coating, adhesion of printing films, etc. Glass material is used as a decorative material for a color layer, a design layer, etc. attached onto a flat surface texture such as a mirror surface due to the transparency, strong surface hardness, and excellent flatness of the material.

However, there are obstacles to product application because of disadvantages such as difficulty in handling due to fragility, difficulty in processing such as cutting, chamfering, etc., weight increase due to high specific gravity compared with plastic materials, and so forth.

In order to overcome the disadvantages of glass and to realize the glass-like texture, acrylic materials or polycarbonate-based materials are used as alternative materials. However, there is a limit to wide range of applications due to high price. Therefore, the development of products that can overcome the disadvantageous fragile nature of glass and can be manufactured economically comparably to acrylic and polycarbonate materials is desired. JP H03 97555 A discloses a decorative material having a permeability and having deepness by laminating a polyester resin layer containing brilliant pigment and a transparent polyester resin layer, i.e. a decorative sheet comprising (a) a color layer and (b) a transparent layer formed on and adjacent to the color layer, wherein the color layer and the transparent layer consist of a polyester-based material.

### [References of Related Art]

### [Patent Documents]

(Patent document 1) International Patent Publication No. WO 2012/148099.
(Patent document 2) International Patent Publication No. WO 2015/026066.

### [Disclosure]

### [Technical Problem]

The present disclosure is directed to realizing the texture of glass on the basis of a polyester-based material including polyethylene terephthalate and, through this, to providing a way of reducing save manufacturing cost compared with acrylic or polycarbonate materials.

### [Technical Solution]

In order to solve the above problem, the present disclosure provides a decorative sheet according to claim 1.

Preferred embodiments are defined by the dependent claims.

### [Advantageous Effects]

The present disclosure provides a polyester-based decorative sheet that can be used for providing decorative effect by attaching the sheet to furniture, automobile interior materials, etc., can realize the sense of depth and three-dimensional effect of a color layer or a decorative layer by including a transparent layer with a texture similar to that of glass, and can reduce manufacturing cost compared with general acrylic products.

### [Brief Description of Drawings]

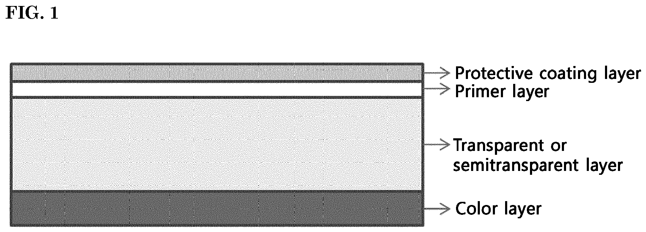

FIG. 1 is a schematic view showing a cross-sectional structure of a decorative sheet according to an exemplary embodiment of the present disclosure.

### [Best Mode]

The present disclosure provides a decorative sheet including (a) a color layer and (b) a transparent layer formed on and adjacent to the color layer, wherein a ratio of the thickness of the transparent layer : the thickness of the color layer is 2-19:1, wherein the color layer and the transparent layer consist of a polyester-based polymer material.

If the thickness ratio is smaller than the lower limit of the numerical range, the glass texture effect may decrease because the thickness of the transparent layer is relatively small. And, if it exceeds the upper limit value, it may be difficult to obtain a color layer with a uniform color distribution through extrusion because the thickness of the color layer is relatively small and an excessive amount of color dye or pigment is necessary to ensure shielding.

The glass texture to be achieved through the present disclosure refers to the phenomenon that, if a layer having a color or design is located below transparent glass, slight color change of the design layer occurs due to the difference in refractive indices of the amorphous glass and the air and the visible light absorption characteristics of the transparent layer and, due to high flatness of the glass surface and the interface between the glass and the lower color layer, the color layer or the design layer looks as if it exists deep beneath the surface.

As an example, the polyester-based polymer may be polyethylene terephthalate.

According to an exemplary embodiment, the decorative sheet further includes (c) a primer layer formed on and adjacent to the transparent layer, and (d) a protective coating layer formed on and adjacent to the primer layer.

According to another exemplary embodiment, the transparent layer is a single layer. According to another exemplary embodiment, the color layer contains a design consisting of a single color or a plurality of colors. In the present disclosure, a single layer means a layer having a multi-layer structure wherein the presence of interlayer interfaces is undiscernible because the refractive indices of layers are almost identical, or the difference in refractive indices is less than 0.01 and the layers consist of compatible polyester-based polymers.

According to the invention, the transparent layer has a gloss analyzed according to ASTM D523 using a gloss meter, such as BYK's micro-TRI-gloss, etc., of 40-100%. The transmittance from the lower color layer to the upper transparent layer analyzed according to ASTM D1003 using a device such as Nippon Denshoku's COH-400, etc. is 0.1-10%. The color brightness (L) value of the decorative sheet measured in the direction of the transparent layer according to ASTM E1164 using a device such as Minolta's CM-2500D, etc. is 1- 40% lower than the color brightness index of the color layer .

As a result of preparing and analyzing many exemplary embodiments according to the present disclosure and many comparative exemplary embodiments outside the scope of the present disclosure, it was found out that, in order to improve physical properties such as the glass texture and the visibility and three-dimensional effect of the lower color layer and shield the surface defect of the bottom substrate layer, in addition to (i) the double-layer structure of the transparent layer and the color layer and (ii) the thickness ratio of the transparent layer and the color layer described above, (iii) the gloss observed on the transparent layer, (iv) the transmittance measured from the color layer to the transparent layer, and (v) the difference in color brightness indices of the color layer and the transparent layer must be within certain ranges.

That is, in order to improve the physical properties such as the glass texture and the visibility and three-dimensional effect of the lower color layer and shield the surface defect of the bottom substrate layer, (i) the decorative sheet of the invetnion has a double-layer structure of the transparent layer and the color layer, (ii) the thickness ratio of the transparent layer and the color layer is 2-19:1, (iii) the gloss observed on the transparent layer according to ASTM D523 is 40-100%, (iv) the total transmittance of the decorative sheet measured from the lower color layer to the upper transparent layer according to ASTM D1003 is 0.1-10%, and (v) the difference in color brightness indices of the color layer and the transparent layer measured according to ASTM E1164 is 1-40%. It was found out that, if any one of the five conditions is not satisfied, the overall physical properties such as the glass texture and the visibility and three-dimensional effect of the lower color layer and shielding of the surface defect of the bottom substrate layer are unsatisfactory.

According to another exemplary embodiment, the decorative sheet has a thickness of 600-4,000 µm. If the thickness of the decorative sheet is smaller than the lower limit of the numerical range, there may be a problem that the glass texture and three-dimensional effect are not exhibited effectively. And, if it exceeds the upper limit, there may be problems of color change, deterioration of transmittance, and degradation of the sense of depth due to the progress of microcrystallization of the polyester-based resin during the extrusion process.

According to another exemplary embodiment, a primer solution and a hard coating solution are coated on the transparent layer by a micro gravure method. According to another exemplary embodiment, metal-based, inorganic-based or polymer-based particles with a particle diameter of 0.1-1 µm are dispersed in the color layer. The particles dispersed in the color layer allow expression of pearly, matt, semi-glossy or finely uneven color.

According to another exemplary embodiment, the color layer and the transparent layer are laminated by extrusion lamination or coextrusion. That is to say, there are two methods of realizing a glass texture using a polyester material, which is an inexpensive plastic material with good transparency. The first method is preparation of a polyester color film including a color dye and a pigment, followed by extrusion lamination of the color film during extrusion of transparent polyester to prepare a color layer and a transparent layer. The second method is preparation of a sheet with a multi-layer structure by coextrusion of a color layer material and a transparent layer polyester material.

Hereinafter, the present disclosure is described in more detail through examples, etc. However, the scope and content of the present disclosure should not be interpreted as being reduced or limited by the examples, etc. It is obvious that those of ordinary skill can easily carry out the present disclosure based on the teachings of the present disclosure including the following examples, even when specific experimental results are not presented, and such variations and modifications belong to the scope of the attached claims.

The experimental results presented below are only representative experimental results of example and comparative examples. The effects of the various embodiments of the present disclosure not presented explicitly in the following will be described specifically in corresponding sections.

### EXAMPLES

### Example

Each of a polyester-based resin including a master batch containing a color dye and a pigment, and a polyester-based virgin raw material was added to an extruder and extrusion was conducted at an extrusion cylinder temperature of 270 °C. Each of the melt-extruded components was passed through a feed block and a T-die to prepare a multi-layer sheet structure, or extruded through different flow paths of a multi-layer T-die, cooled by passing through a cooling roll and then wound to prepare a sheet with a multi-layer structure. In order to achieve the effect of the present disclosure, it is necessary to maintain the thickness ratio of the transparent layer and the color layer between 2:1 and 19:1. In this example, a sheet with a thickness of 1 mm wherein the thickness ratio of the transparent layer and the color layer was 4:1 was prepared.

The extrusion component of the color layer, which was a mixture of 10 wt% of a polyester-based white color master batch and a virgin polyester-based resin, was co-extruded to at 100 kg/hr with the extrusion component of the transparent layer, a virgin polyester-based resin, at 400 kg/hr. A sheet with a thickness of 1 mm (color layer: 0.2 mm, transparent layer: 0.8 mm) was prepared as the co-extruded components passed through the two-layer flow channels and the T-die, and were cooled while passing through the cooling roll. After coating a primer solution and a hard coating solution on the surface of the prepared sheet by a micro gravure method, a protective coating layer was formed by thermally drying and UV-curing the same.

In addition, the gloss on the transparent layer was measured according to ASTM D523 using a gloss meter (BYK, micro-TRI-gloss), and the transmittance from the color layer to the transparent layer was measured according to ASTM D1003 with COH-400 (Nippon Denshoku). The gloss was 92% and the total transmittance was 1.2%.

Further, the color brightness in the transparent layer direction of the decorative sheet was measured using Minolta CM2500D. D65 was used as a sole light source, and the color brightness index was measured as 84.88. The color brightness index of the color layer alone measured in the same manner as in the color layer direction was 92.51. Through this, it was confirmed that the color brightness in the transparent layer direction was decreased by 8.3% as compared to the color layer.

### Comparative Example 1

A sheet with a thickness of 1 mm, consisting of a single color layer was prepared according to the same process as in Example, except that the same materials as the components of the white color layer instead of the extrusion components of the transparent layer were used. Then, a comparative product was prepared by forming a protective coating layer.

The gloss was 91%, the total transmittance was 0.5%, and the color brightness indices on the upper and lower surfaces of the color layer were 92.66 and 92.71, respectively. The difference in color brightness of the upper and lower surfaces was 0.05%.

### Comparative Example 2

A sheet was prepared according to the same process as in Example, except that the input amount of the color master batch for the color layer was adjusted to 1%. A final product was prepared by forming a protective coating layer on a transparent layer.

The gloss was 91.5%, the total transmittance was 18%, the color brightness index in the transparent layer direction was 73.20, and color brightness index in the color layer direction was 75.82. The difference in color brightness in the transparent layer direction and in the color layer direction was 3.5%.

### Comparative Example 3

A sheet with a total thickness of 1 mm (transparent layer 200 µm, color layer 800 µm) was prepared according to the same process as in Example, except that 400 kg/hr of the components of the color layer and 100 kg/hr of the components of the transparent layer were input. Then, a comparative product was prepared by forming a protective coating layer.

The gloss was 91.8%, the total transmittance was 0.3%, the color brightness index in the transparent layer direction was 92.24, and color brightness index in the color layer direction was 92.98. The difference in color brightness in the transparent layer direction and in the color layer direction was 0.8%.

### Comparative Example 4

A sheet with a thickness of 0.4 mm was prepared according to the same process as in Example by changing line speed during extrusion. Then, a comparative product was prepared by forming a protective coating layer.

The gloss was 92%, the total transmittance was 0.6%, the color brightness index in the transparent layer direction was 91.94, and color brightness index in the color layer direction was 92.77. The difference in color brightness in the transparent layer direction and in the color layer direction was 0.9%.

### Test Example 1 and Comparative Test Examples 1-4

For the decorative sheets prepared in Example 1 and Comparative Examples 1-4, sensory tests were performed for ① similarity to glass texture, ② visibility of the design of the lower color layer, ③ sense of depth or three-dimensional effect, ④ shielding of the surface defects of the lowermost substrate layer, and ⑤ uniformity of color distribution.

The test was conducted by a total of 100 inspectors aged between 30 and 50 years (50 male, 50 female). To achieve stable evaluation results, all the inspectors went through a common training course 1 hour before the test.

For the five test items, 0 point was given to the worst physical property and 10 points was given to the best physical property. The results for the 100 inspectors were averaged, and the result is shown in Table 1.

**[Table 1]**

| Test items | ① | ② | ③ | ④ | ⑤ |
|---|---|---|---|---|---|
| Example 1 | 9.6 | 9.4 | 9.1 | 9.5 | 9.4 |
| Comparative Example 1 | 3.4 | 9.4 | 1.1 | 9.4 | 9.4 |
| Comparative Example 2 | 4.7 | 5.3 | 7.5 | 2.0 | 6.3 |
| Comparative Example 3 | 5.4 | 9.3 | 3.2 | 7.1 | 9.2 |
| Comparative Example 4 | 2.8 | 9.4 | 3.0 | 5.2 | 7.1 |

Test items: ① similarity to glass texture, ② visibility of the design of the lower color layer, ③ sense of depth or three-dimensional effect, ④ shielding of the surface defects of the lowermost substrate layer, ⑤ uniformity of color distribution.

Although not described in this specification, numerous examples satisfying the following five requirements and numerous comparative examples not satisfying at least one of them were tested. As a result, the following five conditions could be derived as parameters that play important roles in achieving the five test items described. Interestingly, it was confirmed that, if any one of the five conditions is not satisfied, the five above physical properties are unsatisfactory as a whole.
(i) A double-layer structure of a transparent layer and a color layer, (ii) the thickness ratio of the transparent layer and the color layer: 2-19:1, (iii) the gloss observed on the transparent layer according to ASTM D523: 40-100%, (iv) the transmittance measured from the color layer to the transparent layer according to ASTM D1003: 0.1-10%, (v) the difference in color brightness indices of the color layer and the transparent layer measured according to ASTM E1164: 1-40%.

## Claims

1. A decorative sheet comprising (a) a color layer and (b) a transparent layer formed on and adjacent to the color layer, wherein the ratio of the thickness of the transparent layer : the thickness of the color layer is 2-19:1, and the color layer and the transparent layer consist of a polyester-based material, wherein the transparent layer is a single layer, and the color layer comprises a design consisting of a single color or a plurality of colors and wherein the gloss on the transparent layer analyzed according to ASTM D523 is 40-100%, the total transmittance from the color layer to the transparent layer analyzed according to ASTM D1003 is 0.1-10%, and the difference in color brightness indices of the transparent layer and of the color layer analyzed according to ASTM E1164 is 1-40%.

2. The decorative sheet according to claim 1, which further comprises (c) a primer layer formed on and adjacent to the transparent layer, and (d) a protective coating layer formed on and adjacent to the primer layer.

3. The decorative sheet according to claim 1, wherein the decorative sheet has a thickness of 600-5,000 µm.

4. The decorative sheet according to claim 3, wherein a hard coating layer with the gloss adjusted to 4-100% is formed on the transparent layer, and metal-based, inorganic-based or polymer-based particles with a particle diameter of 0.1-1 µm are dispersed in the color layer.

5. The decorative sheet according to claim 4, wherein the color layer and the transparent layer are laminated by coextrusion or extrusion lamination.

## Patentansprüche

1. Dekorplatte, umfassend (a) eine Farbschicht und (b) eine transparente Schicht, gebildet auf und neben der Farbschicht, wobei das Verhältnis Dicke der transparenten Schicht: Dicke der Farbschicht 2-19:1 ist, und die Farbschicht und die transparente Schicht aus einem Polyester-basierten Material bestehen, wobei die transparente Schicht eine einzelne Schicht ist, und die Farbschicht ein Design umfasst, bestehend aus einer einzigen Farbe oder einer Vielzahl von Farben, und wobei der Glanz auf der transparenten Schicht, analysiert nach ASTM D523, 40-100 % ist, die Gesamtdurchlässigkeit von der Farbschicht zu der transparenten Schicht, analysiert nach ASTM D1003, 0,1-10 % ist, und der Unterschied in Farbhelligkeitsindizes der transparenten Schicht und der Farbschicht, analysiert nach ASTM E1164, 1-40 % ist.

2. Dekorplatte nach Anspruch 1, die ferner (c) eine Grundierschicht, gebildet auf und neben der transparenten Schicht, und (d) eine Schutzbeschichtungsschicht, gebildet auf und neben der Grundierungsschicht, umfasst.

3. Dekorplatte nach Anspruch 1, wobei die Dekorplatte eine Dicke von 600-5.000 µm hat.

4. Dekorplatte nach Anspruch 3, wobei eine harte Beschichtungsschicht mit dem Glanz, eingestellt auf 4-100 %, auf der transparenten Schicht gebildet ist, und Metall-basierte, anorganisch-basierte oder Polymer-basierte Partikel mit einem Partikeldurchmesser von 0,1-1 µm in der Farbschicht dispergiert sind.

5. Dekorplatte nach Anspruch 4, wobei die Farbschicht und die transparente Schicht durch Koextrusion oder Extrusionslaminierung laminiert sind.

## Revendications

1. Feuille décorative comprenant (a) une couche de couleur et (b) une couche transparente formée sur et adjacente à la couche de couleur, dans laquelle le rapport de l'épaisseur de la couche transparente:l'épaisseur de la couche de couleur est de 2-19:1, et la couche de couleur et la couche transparente sont constituées d'un matériau à base de polyester, dans laquelle la couche transparente est une couche unique, et la couche de couleur comprend un motif constitué d'une couleur unique ou d'une pluralité de couleurs et dans laquelle le brillant sur la couche transparente analysé selon la norme ASTM D523 est de 40 à 100 %, la transmittance totale de la couche de couleur à la couche transparente analysée selon la norme ASTM D1003 est de 0,1 à 10 %, et la différence dans les indices de brillance de couleur de la couche transparente et de la couche de couleur analysée selon la norme ASTM E1164 est de 1 à 40 %.

2. Feuille décorative selon la revendication 1, qui comprend en outre (c) une couche d'apprêt formée sur et adjacente à la couche transparente, et (d) une couche de revêtement protecteur formée sur et adjacente à la couche d'apprêt.

3. Feuille décorative selon la revendication 1, dans laquelle la feuille décorative a une épaisseur de 600 à 5 000 µm.

4. Feuille décorative selon la revendication 3, dans laquelle une couche de revêtement dur avec le brillant ajusté à 4 à 100 % est formée sur la couche transparente, et des particules à base de métal, à base de matière inorganique ou à base de polymère avec un diamètre de particule de 0,1 à 1 µm sont dispersées dans la couche de couleur.

5. Feuille décorative selon la revendication 4, dans laquelle la couche de couleur et la couche transparente sont stratifiées par coextrusion ou stratification par extrusion.
